# FASCICULE DE BREVET EUROPEEN

(11) **EP 1 894 073 B1**
(45) Date de publication et mention de la délivrance du brevet: **18.05.2011**
(21) Numéro de dépôt: 06764711.5
(22) Date de dépôt: 01.06.2006
(51) Int. Cl.: B63H 25/04, G05D 1/02

(54) **MODULE ET SYSTEME DE PILOTAGE AUTOMATIQUE D'UN BATEAU A VOILE POUR LA NAVIGATION EN PRESENCE DE VAGUES.**
MODUL UND SYSTEM ZUM AUTOMATISCHEN LENKEN EINES SEGELBOOTS ZUM SEGELN BEI ANWESENHEIT VON WELLEN
MODULE AND SYSTEM FOR AUTOMATIC PILOTING OF A SAIL BOAT FOR SAILING IN THE PRESENCE OF WAVES

(30) Priorité: 10.06.2005 FR 0505912
(43) Date de publication de la demande: 05.03.2008
(73) Titulaire: AGENCE SPATIALE EUROPEENNE, 75738 Paris Cedex 15 (FR)
(72) Inventeur: LOPRIORE, Mario, NL-2343 HH Oegstgeest (NL)
(74) Mandataire: Priori, Enrico
(86) Numéro de dépôt international: PCT/FR2006/001240
(87) Numéro de publication internationale: WO 2006/131622

(56) Documents cités:
- EP-A- 0 129 287
- EP-A- 0 710 901
- DE-A- 19 900 847
- US-A- 4 040 374
- US-A- 5 152 239
- US-A- 5 408 406
- PATENT ABSTRACTS OF JAPAN vol. 008, no. 094 (M-293), 28 avril 1984 (1984-04-28) -& JP 59 008593 A (MITSUBISHI ELECTRIC CORP), 17 janvier 1984 (1984-01-17)

## Description

L'invention porte sur un module de génération de signaux de correction pour un système de pilotage automatique d'un bateau à voile ou d'un voilier permettant audit système de pilotage automatique d'effectuer des corrections de route en prenant en compte l'effet des vagues sur la navigation, notamment afin d'augmenter la vitesse du bateau, diminuer son mouvement de dérive et améliorer le confort à bord.

L'invention porte également sur un système de pilotage automatique comprenant un tel module.

Il est bien connu que, lorsqu'on navigue à voile en présence de vagues, il est préférable, du point de vue de la minimisation du mouvement de dérive, de la maximisation de la vitesse du bateau et de l'augmentation du confort à bord, de ne pas maintenir le gouvernail dans une position fixe, mais d'effectuer des corrections de route rapides en correspondance de chaque vague. Cela est particulièrement important lorsque la direction des vagues coïncide approximativement avec celle du vent et le bateau navigue au près ou, inversement, au grand largue.

L'effet des vagues sur la navigation d'un bateau à voile dans le premier cas considéré (allure de près, vagues dans la direction du vent) est expliqué en détail dans l'ouvrage de Frank Bethwaite « High Performance Sailing » International Marine/Ragged Mountain Press, 1ère édition (1996) ISBN 0-7136-6704-4, pages 305-319.

La nature des corrections à apporter dans une allure de grand largue est expliquée dans l'ouvrage « This is sailing » de Jim Saltonstall, ISBN 0713663596 pages 96 et 97.

Ce type de navigation demande beaucoup d'attention de la part d'un barreur très expérimenté, ce qui limite son domaine d'application à la navigation de compétition. Or, il serait avantageux d'effectuer ce genre de correction également en navigation de plaisance, principalement dans le but d'améliorer le confort à bord. Cependant, cela n'est généralement pas possible, soit faute d'expérience du barreur, soit parce que l'effort demandé à ce dernier serait excessif par rapport à l'enjeu.

Même en compétition, il serait avantageux de pouvoir alléger la tâche du barreur, aussi bien pour en réduire la fatigue que pour lui permettre d'abandonner momentanément la barre sans que la qualité de la navigation en soit détériorée.

Les systèmes de pilotage automatique pour bateaux à voile connus de l'art antérieur n'apportent pas de solution à ce problème. Ces systèmes comportent généralement un capteur de vent, un compas de route (boussole), un module de pilotage et un module d'actionnement du gouvernail du bateau. Le module de pilotage reçoit en entrée des signaux provenant du compas et du capteur de vent et génère en sortie des signaux de commande du module d'actionnement du gouvernail de manière à maintenir une direction de navigation déterminée, soit par rapport au Nord, soit par rapport à la direction du vent. Ces systèmes connus de pilotage automatique maintiennent donc le cap dans une direction fixe et ne permettent pas d'effectuer les corrections de route précitées en correspondance des vagues. Il en résulte que la navigation automatique en présence de vagues n'est pas optimale, ni en termes de confort, ni en termes de performances, surtout dans les allures de près et de grand largue.

Le document US 5,632,217 divulgue un tel système de pilotage automatique conventionnel. Le document US 5, 152,239, qui est considéré comme représentant l'art antérieur le plus proche, décrit un système de pilotage automatique avec les caractéristiques du préamble de la revendication independante 1.

Un but de la présente invention est de remédier à au moins un des inconvénients précités.

Un objet de l'invention est donc un module de génération de signaux de correction de pilotage pour un système de pilotage automatique d'un bateau à voile comportant :
- une entrée pour un signal indicatif d'un mouvement du bateau provoqué par des vagues ;
- une unité d'élaboration pour générer un signal de correction de pilotage à partir dudit signal indicatif d'un mouvement du bateau ; et
- une sortie pour ledit signal de correction de pilotage.

Avantageusement l'unité d'élaboration est prévue pour générer, en correspondance du franchissement d'une vague par le bateau, un signal de correction de pilotage déterminé sur la base d'une partie dudit signal indicatif d'un mouvement du bateau provoqué par cette même vague, de manière à réaliser une correction « vague par vague ».

Selon un mode de réalisation de l'invention, un tel module comporte une entrée pour un signal d'apprentissage représentatif d'une correction de pilotage effectuée manuellement par un opérateur humain pendant une phase de calibrage et l'unité d'élaboration comprend un moyen d'apprentissage pour déterminer, sur la base dudit signal d'apprentissage, une relation entre ledit signal indicatif d'un mouvement du bateau et le signal de correction de pilotage correspondant.

Plus précisément, au moins un paramètre parmi une amplitude, une durée et une temporisation dudit signal de correction de pilotage est déterminé à partir d'une valeur moyenne d'un paramètre dudit signal d'apprentissage.

Afin d'obtenir des meilleures performances, ladite relation entre ledit signal indicatif d'un mouvement du bateau et le signal de correction de pilotage correspondant peut aussi être déterminée, au moins en partie, au moyen d'un algorithme d'identification des systèmes.

Avantageusement, un tel module comporte également une entrée pour un signal d'ajustement manuel dudit signal de correction de pilotage.

Un autre objet de l'invention est un système de pilotage automatique d'un bateau à voile comportant :
- un module principal pour générer un signal de pilotage principal afin de maintenir une orientation prédéterminée du cap du bateau ;
- un dispositif de détection d'un mouvement du bateau provoqué par des vagues pour générer un signal indicatif dudit mouvement ;
- un module de génération de signaux de correction de pilotage tel que décrit ci-dessus pour recevoir en entrée ledit signal indicatif d'un mouvement du bateau et pour générer un signal de correction de pilotage ; et
- un module d'actionnement pour actionner le gouvernail dudit bateau sur la base au moins dudit signal de pilotage principal et dudit signal de correction de pilotage.

En particulier, ledit signal de correction de pilotage est déterminé de manière à provoquer une correction de route du bateau dans la direction de provenance des vagues en correspondance du franchissement de leurs crêtes et dans la direction opposée en correspondance du franchissement de leur creux.

Ledit dispositif de détection d'un mouvement du bateau peut comporter au moins un accéléromètre pour déterminer une accélération d'une partie du bateau et/ou au moins un dispositif de positionnement par satellite pour déterminer la position instantanée d'une partie du bateau.

D'autres caractéristiques, détails et avantages de l'invention ressortiront à la lecture de la description faite en référence aux dessins annexés, donnés à titre d'exemple, et qui montrent :
La figure 1, l'effet des vagues sur la route suivie par un bateau à voile naviguant au près et les avantages qui peuvent être obtenus à l'aide de corrections de route appropriées ; et
La figure 2, un schéma de principe d'un mode de réalisation de l'invention.

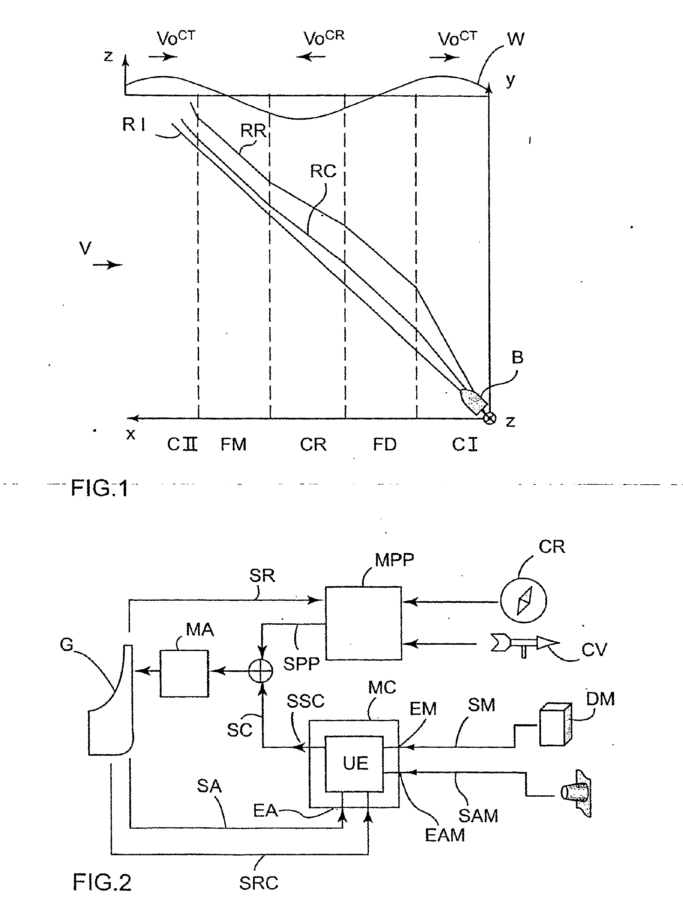

La figure 1 représente schématiquement une portion d'un plan d'eau x-y dans lequel des vagues se propagent dans la direction V (qui correspond à la direction -x), coïncidente avec la direction du vrai vent ; bien entendu, une coïncidence exacte n'est pas requise en pratique. Un bateau B souhaite naviguer « contre » le vent et les vagues en suivant une route RI qui forme un angle de 45° avec la direction V (allure de près). En haut de la figure est représentée, en coupe x-z, une vague W ; cette vague subdivise la portion de plan considérée en cinq zones ou bandes orientées suivant l'axe y : une première crête CI, un front descendant FD, un creux CR, un front montant FM et une deuxième crête CII.

Il est connu que les molécules d'eau dans une vague se déplacent le long de trajectoires approximativement circulaires. L'eau présente donc une composante horizontale de sa vitesse qui, en correspondance des crêtes (CI, CII), est orientée dans le sens de la propagation (flèches V_{O}^{CT} en haut de la figure), et en correspondance des creux (CR) est orientée dans le sens opposée (flèche V_{O}^{CR}).

Comme expliqué dans l'ouvrage précité de Frank Bethwaite, lorsque le bateau B franchit une crête CI ou CII, sa vitesse de déplacement se combine avec la vitesse V_{O}^{CT} de l'eau : le bateau est donc ralenti et subit une dérive importante par rapport à la route « idéale » RI. A l'envers, lors du franchissement d'un creux CR, le bateau est accéléré est se rapproche de ladite route RI. Cependant, ces deux effets ne se compensent pas exactement, car à cause du ralentissement, le bateau B passe beaucoup plus de temps dans les zones de crête CI, CII que dans les zones de creux CR : par conséquent, globalement le bateau B est ralenti et présente un mouvement de dérive important. La ligne RR représente la route suivie réellement par un bateau B qui maintiendrait son gouvernail fixé dans la direction indiquée par la droite RI. Il convient d'observer que, dans ce cas, le cap du bateau est toujours orienté parallèlement à RI, mais pas son déplacement.

Une correction appropriée peut être obtenue en lofant (c'est à dire en rapprochant le nez de la direction dont provient le vent) en correspondance des crêtes et en laissant porter (c'est-à-dire en éloignant le nez du vent) en correspondance des creux. La correction est apportée sous la forme d'une « impulsion » de durée de l'ordre d'une seconde ou moins et d'amplitude, par exemple, de l'ordre de 15° ; l'amplitude et la durée de la correction, ainsi que le moment précis auquel elle doit être effectuée (temporisation), dépendent d'une manière complexe de nombreux paramètres, tels que la vitesse du vent, la hauteur et la longueur d'onde des vagues, la vitesse du bateau, son angle d'attaque des vagues et ses caractéristiques hydrodynamiques.

L'avantage en terme de performances obtenu grâce à ces corrections de route peut être très important. D'après Bethwaite, en présence de vagues de 100 pieds (30,48 m) de long et de 6 pieds (1,83 m) de haut, un bateau naviguant à une vitesse moyenne de 5 noeuds (1 noeud = 1,852 km/h) sans effectuer de corrections subit une perte de vitesse utile de 30%, la vitesse utile étant définie comme la distance parcourue dans la direction de la route « idéale » RI dans l'unité de temps. Cette perte de vitesse utile peut être ramenée à 5% en effectuant les corrections appropriées. En outre, la navigation est rendue plus confortable, car le bateau traverse les creux CR des vagues en formant avec leur direction de propagation V un angle plus grand que dans la navigation à cap fixe : on évite ainsi que le nez du bateau rentre en collision violente avec le front montant FM qui suit. La ligne RC montre un exemple de route réelle obtenue en effectuant de telles corrections.

Comme expliqué par l'ouvrage précité « This is sailing » de Jim Saltonstall, la même technique peut être appliquée avec profit dans le cas d'une navigation au largue, dans laquelle la vitesse de propagation des vagues est supérieure à celle du bateau et forme avec le cap un angle supérieur à 90° (vagues qui arrivent « par derrière »). Dans ce cas, il est avantageux de laisser porter lorsque la vague arrive par derrière, de manière à profiter plus longtemps de l'effet de la poussée générée par cette dernière, et de lofer lorsque le bateau est dépassé par la vague, pour réduire au minimum la durée du ralentissement qui en suit.

D'une manière conventionnelle, ces corrections sont appliquées manuellement par le barreur, qui détermine leur ampleur, durée et temporisation grâce à son expérience.

La figure 2 montre un schéma de principe d'un système selon l'invention qui permet d'appliquer lesdites corrections lors du pilotage du bateau sans besoin d'une intervention humaine continue. Un tel système comprend les éléments d'un système de pilotage automatique conventionnel : un compas de route CR, un capteur de vent CV, détectant au moins la direction du vent, un module d'actionnement MA d'un gouvernail G et un module principal de pilotage MPP. D'une manière connue, le module principal de pilotage MPP reçoit en entrée un signal généré par le compas CR indiquant l'orientation du cap par rapport au nord, un signal du capteur de vent CV indiquant la direction (et éventuellement la vitesse) du vent et un signal de rétroaction SR provenant du gouvernail G et indiquant son orientation. A partir de ces signaux en entrée, le module de pilotage principal MPP génère un signal de pilotage principal SPP qui commande le module d'actionnement MA pour que ce dernier agisse sur le gouvernail de manière à maintenir une orientation du cap du bateau fixe par rapport au nord ou à la direction du vent.

Contrairement à un système connu de l'art antérieur, le système de pilotage automatique de l'invention comporte également un module de correction MC qui reçoit à une entrée EM un signal SM indicatif d'un mouvement du bateau provoqué par les vagues (roulis, tangage, déplacement vertical). Le signal SM est généré par un dispositif de détection de mouvement DM qui peut être constitué, par exemple, par un ensemble tridimensionnel d'accéléromètres, ou bien par un dispositif de positionnement par satellite (GPS, Egnos ou Galileo) sensible au déplacement vertical du bateau en correspondance des vagues, par un clinomètre, voire par une combinaison de ces types de détecteurs.

En ce qui concerne l'utilisation d'un dispositif de positionnement par satellite, la technique de double différence non consécutive de phase de la porteuse permet de mesurer la période des vagues ainsi que leur hauteur avec une erreur de l'ordre de 5 cm à l'aide d'un seul récepteur GPS embarqué sur un bateau. Cette technique, décrite dans la thèse de doctorat de M. Martin Neira « Application of the GNSS Systems to Spacecraft Landing, Attitude Determination and Earth Observation Constellations », 5 avril 1996, comporte la détermination de la différence de phase entre les porteuses de deux satellites à deux instants différents, un instant initial et un instant présent.

Une unité d'élaboration UE détermine, à partir dudit signal SM et, éventuellement, d'un deuxième signal de rétroaction SRC provenant du gouvernail G, un signal de correction de pilotage SC, destiné à agir sur le gouvernail G pour modifier le cap de manière à orienter le nez du bateau dans la direction de provenance des vagues en correspondance du franchissement de leur crête et dans la direction opposée en correspondance de leur creux, comme décrit ci-dessus.

Le signal de correction SC, prélevé d'une sortie SSC dudit module de correction MC, est combiné avec le signal de pilotage principal SPP dans un dispositif additionneur S pour générer un signal de pilotage SPC intégrant lesdites corrections, qui est fourni en entrée au module d'actionnement MA.

De préférence la correction appliquée en correspondance de chaque vague est déterminée en fonction du signal SM correspondant au mouvement du bateau provoqué par cette même vague : autrement dit, le module de correction agit comme le barreur humain qui « sent » la vague au moment de la franchir et détermine la correction sur la base de cette sensation. Selon un mode de réalisation alternatif, la correction pour chaque vague est basée sur le signal SM correspondant à la vague précédente, ou sur une moyenne, éventuellement pondérée, d'un certain nombre de vagues précédentes. Ce mode de réalisation impose des contraintes moins strictes sur la vitesse du dispositif de détection de mouvement DM et de l'unité d'élaboration EM, mais permet une correction moins fine : en effet, il est connu que la hauteur des vagues n'est pas constante et qu'une vague sur sept environ est sensiblement plus haute que les autres. On peut également combiner ces modes de réalisation et déterminer le signal de correction SC sur la base d'une moyenne pondérée des signaux SM correspondant à la vague actuelle et aux vagues précédentes.

Le signal de correction SC ne peut pas toujours être exprimé sous la forme d'une fonction du signal SM déterminée une fois pour toutes : comme il a été expliqué plus haut, l'amplitude et la durée de la correction, ainsi que le moment précis auquel elle doit être effectuée dépendent d'une manière complexe de nombreux paramètres, tels que la vitesse du vent, la hauteur et la longueur des vagues, la vitesse du bateau, l'angle d'attaque des vagues, les caractéristiques du bateau ; un calibrage est donc nécessaire.

Ce calibrage peut être effectué par le barreur qui, pendant une première période de temps, dirige lui-même le bateau en effectuant manuellement les corrections nécessaires. Pendant cette période de calibrage, l'unité d'élaboration UE du module de correction MC reçoit à une entrée EA un signal d'apprentissage SA représentatif des corrections effectuées manuellement (le signal d'apprentissage SA peut en fait coïncider avec le deuxième signal de rétroaction SRC provenant du gouvernail G, bien que sur la figure 2 il ait été représenté comme un signal distinct) et le signal SM représentatif du mouvement du bateau. A l'aide d'un moyen d'apprentissage (généralement un moyen logiciel, exécutant un algorithme adapté), l'unité d'élaboration détermine une relation empirique entre SM et le signal de correction SC adapté, après quoi le système peut fonctionner de manière automatique, au moins jusqu'à qu'une modification des conditions de la mer ou du vent ne rende nécessaire une nouvelle intervention humaine.

Dans le cas le plus simple, l'unité d'élaboration UE calculera une moyenne, éventuellement pondérée, des corrections appliquées manuellement. Autrement dit, elle déterminera une amplitude moyenne, une durée moyenne et une temporisation moyenne (définie, par exemple, comme le retard de la correction de route calculé à partir du franchissement de la crête, du creux ou du point à accélération maximale de la vague) du signal de correction SC' qui aurait produit sur le gouvernail G le même effet que les corrections manuelles effectuées par le barreur. Ce signal de correction moyen sera appliqué lors du franchissement de chaque vague successive, le signal SM étant utilisé uniquement comme temporisation.

Des meilleures performances peuvent être obtenues, au prix d'une plus grande sophistication, par l'utilisation d'une méthode d'identification des systèmes pour déterminer un modèle « à boite noire » qui, recevant en entrée le signal SM correspondant aux vagues traversées pendant la période d'apprentissage, aurait généré en sortie un signal de correction SC' qui aurait produit sur le gouvernail G le même effet que lesdites corrections manuelles effectuées par le barreur. Il s'agit la d'une technique bien connue en automatique. De cette façon, après la phase d'apprentissage, le système peut opérer correctement sans besoin d'intervention humaine malgré des variations de la période, de la hauteur et de direction des vagues, pourvu que ces variations ne soient pas trop importantes.

Il est également possible de combiner les deux approches : par exemple, l'identification peut porter uniquement sur l'amplitude et la durée de la correction, alors que pour sa temporisation on utilise des valeurs moyennes, ou inversement.

Alternativement, il est possible d'utiliser une correction d'amplitude et durée fixes et dont la temporisation dépend de la période des vagues, mesurée en continu à l'aide du dispositif de détection de mouvement DM. Cette méthode aussi permet au système d'opérer correctement sans besoin d'intervention humaine malgré des variations de la période et/ou de la direction des vagues, pourvu que ces variations ne soient pas trop importantes.

D'une manière optionnelle, le module de correction MC peut comporter une entrée EAM pour un signal d'ajustement manuel SAM du signal de correction SC, de manière à permettre à un opérateur humain d'intervenir, même après la phase de calibrage, pour ajuster manuellement l'amplitude, la durée et/ou la temporisation dudit signal de correction SC.

Le mode de réalisation de la figure 2 est particulièrement avantageux car il permet d'ajouter le module de correction de l'invention à un système de pilotage automatique conventionnel en apportant à ce dernier seulement des modifications marginales (insertion du dispositif additionneur S entre le module principal de pilotage MPP et le module d'actionnement MA). On comprend cependant que l'invention couvre également un mode de réalisation dans lequel les fonctionnalités des modules MPP et MCC seraient intégrées dans une même unité.

## Revendications

1. Système de pilotage automatique d'un bateau à voile comportant :
- un module principal de pilotage (MPP) pour générer un signal de pilotage principal (SPP) afin de maintenir une orientation prédéterminée du cap du bateau ;
- un dispositif (DM) de détection d'un mouvement du bateau provoqué par des vagues pour générer un signal (SM) indicatif dudit mouvement ;
- un module (MC) de génération de signaux de correction de pilotage comportant une entrée (EM) pour ledit signal (SM) indicatif d'un mouvement du bateau provoqué par des vagues, une unité d'élaboration (UE) pour générer un signal de correction de pilotage (SC) à partir dudit signal (SM) indicatif d'un mouvement du bateau et une sortie (SSC) pour ledit signal de correction de pilotage (SC) ; et
- un module d'actionnement (MA) pour actionner le gouvernail (G) dudit bateau sur la base au moins dudit signal de pilotage principal (SPP) et dudit signal de correction de pilotage (SC),
**caractérisé en ce que** ledit signal de correction de pilotage (SC) est déterminé de manière à provoquer une correction de route du bateau dans la direction de provenance des vagues en correspondance du franchissement de leurs crêtes (CI, CII) et dans la direction opposée en correspondance du franchissement de leur creux (CR).

2. Système selon la revendication 1 dans lequel l'unité d'élaboration (UE) du module (MC) de génération de signaux de correction de pilotage est prévue pour générer, en correspondance du franchissement d'une vague (W) par le bateau, un signal de correction de pilotage (SC) déterminé sur la base d'une partie dudit signal (SM) indicatif d'un mouvement du bateau provoqué par cette même vague (W).

3. Système selon la revendication 1 ou 2 dans lequel le module (MC) de génération de signaux de correction de pilotage comporte :
- une entrée (EA) pour un signal d'apprentissage (SA) représentatif d'une correction de pilotage effectuée manuellement par un opérateur humain pendant une phase de calibrage ; et
- dans lequel l'unité d'élaboration (UE) dudit module (MC) de génération de signaux de correction de pilotage comprend un moyen d'apprentissage pour déterminer, sur la base dudit signal d'apprentissage (SA), une relation entre ledit signal (SM) indicatif d'un mouvement du bateau et le signal de correction de pilotage (SC) correspondant.

4. Système selon la revendication 3 dans lequel au moins un paramètre parmi une amplitude, une durée et une temporisation dudit signal de correction de pilotage (SC) est déterminé à partir d'une valeur moyenne d'un paramètre dudit signal d'apprentissage (SA).

5. Système selon la revendication 3 ou 4 dans lequel ladite relation entre ledit signal (SM) indicatif d'un mouvement du bateau et le signal de correction de pilotage (SC) correspondant est déterminée, au moins en partie, au moyen d'un algorithme d'identification des systèmes.

6. Système selon l'une des revendications précédentes dans lequel le module (MC) de génération de signaux de correction de pilotage comporte également une entrée (EAM) pour un signal d'ajustement manuel (SAM) dudit signal de correction de pilotage (SC).

7. Système selon l'une des revendications précédentes dans lequel ledit dispositif (DM) de détection d'un mouvement du bateau comporte au moins un accéléromètre pour déterminer une accélération d'une partie du bateau.

8. Système selon l'une des revendications précédentes dans lequel ledit dispositif (DM) de détection d'un mouvement du bateau comporte au moins un dispositif de positionnement par satellite pour déterminer la position instantanée d'une partie du bateau.

## Claims

1. An automatic pilot system for automatically steering a sailboat, which system comprises:
· a main pilot module (MPP) for generating a main steering signal (SPP) in order to keep the sailboat on a predetermined heading;
· a movement detector device (DM) for detecting movement of the sailboat that is caused by waves, and for generating a signal (SM) indicating said movement;
a steering correction signal generator module (MC) comprising an inlet (EM) for said signal (SM) indicating movement of the sailboat that is caused by waves, a processing unit (UE) for generating a steering correction signal (SC) on the basis of said signal (SM) indicating movement of the sailboat, and an outlet (SSC) for said steering correction signal (SC); and
an actuator module (MA) for actuating the rudder (G) of said sailboat on the basis at least of said main steering signal (SPP) and of said steering correction signal (SC);
said system being **characterized in that** said steering correction signal (SC) is determined in a manner such as to cause the course of the sailboat to be corrected towards the direction from which the waves are coming in correspondence with their crests (CI, CII) and away from said direction in correspondence with their troughs (CR).

2. A system according to claim 1, in which the processing unit (UE) of the steering correction signal generator module (MC) is designed to generate, in correspondence with the sailboat going over a wave (W), a steering correction signal (SC) determined on the basis of a portion of said signal (SM) indicating movement of the sailboat that is caused by the same wave (W).

3. A system according to claim 1 or claim 2, in which the steering correction signal generator (MC) comprises:
· an inlet (EA) for a training signal (SA) representative of a steering correction made manually by a human operator during a calibration stage; and
in which the processing unit (UE) of said steering correction signal generator module (MC) includes training means for determining, on the basis of said training signal (SA), a relationship between said signal (SM) indicating movement of the sailboat and the corresponding steering correction signal (SC).

4. A system according to claim 3, in which at least one parameter from among the amplitude, the length of time, and the timing of said steering correction signal (SC) is determined on the basis of a mean value of a parameter of said training signal (SA).

5. A system according to claim 3 or 4, in which said relationship between said signal (SM) indicating movement of the sailboat and the corresponding steering correction signal (SC) is determined, at least in part, by a system identification algorithm.

6. A system according to any preceding claim, in which the steering correction signal generator module (MC) further comprises an inlet (EAM) for a manual adjustment signal (SAM) for manually adjusting said steering correction signal (SC).

7. A system according to any preceding claim, in which said movement detector device (DM) for detecting movement of the sailboat includes at least one accelerometer for determining acceleration of a portion of the sailboat.

8. A system according to any preceding claim, in which said movement detector device (DM) for detecting movement of the sailboat includes at least one satellite positioning device for determining the instantaneous position of a portion of the sailboat.

## Patentansprüche

1. System zur automatischen Steuerung eines Segelschiffs, umfassend:
- ein Hauptsteuerungsmodul (MPP) zum Erzeugen eines Hauptsteuerungssignals (SPP), um eine vorbestimmte Orientierung des Kurses des Schiffs beizubehalten;
- eine Vorrichtung (DM) zur Erfassung einer durch Wellen hervorgerufenen Bewegung des Schiffs, um ein die Bewegung anzeigendes Signal (SM) zu erzeugen;
- ein Modul (MC) zur Erzeugung von Steuerungskorrektursignalen, welche einen Eingang (EM) für das die durch Wellen hervorgerufene Bewegung des Schiffs anzeigende Signal (SM), eine Bearbeitungseinheit (UE) zum Erzeugen eines Steuerungskorrektursignals (SC) ausgehend von dem eine Bewegung des Schiffs anzeigenden Signal (SM) und einen Ausgang (SSC) für das Steuerungskorrektursignal (SC) umfasst; und
- ein Betätigungsmodul (MA), um das Ruder (G) des Schiffs auf Grundlage wenigstens des Hauptsteuerungssignals (SPP) und des Steuerungskorrektursignals (SC) zu betätigen,
**dadurch gekennzeichnet, dass** das Steuerungskorrektursignal (SC) derartig bestimmt wird, dass eine Routenkorrektur des Schiffs in der Herkunftsrichtung der Wellen in Entsprechung zu einer Durchquerung ihrer Kämme (CI, CII) und in der entgegengesetzten Richtung in Entsprechung zu der Durchquerung ihrer Täler (CR) hervorgerufen wird.

2. System nach Anspruch 1, bei welchem die Bearbeitungseinheit (UE) des Moduls (MC) zur Erzeugung der Steuerungskorrektursignale vorgesehen ist, um in Entsprechung zu der Durchquerung einer Welle (B) durch das Schiff ein Steuerungskorrektursignal (SC) zu erzeugen, welches bestimmt ist auf Grundlage eines Teils des eine Bewegung des Schiffs anzeigenden Signals (SM), welche durch diese selbe Welle (W) hervorgerufen ist.

3. System nach Anspruch 1 oder 2, bei welchem das Modul (MC) zur Erzeugung von Steuerungskorrektursignalen umfasst:
- einen Eingang (EA) für ein Lernsignal (SA), welches eine Steuerungskorrektur darstellt, die manuell durch eine menschliche Bedienperson während einer Kalibrierungsphase bewirkt wird; und
- bei welchem die Bearbeitungseinheit (UE) des Moduls (MC) zur Erzeugung der Steuerungskorrektursignale ein Lernmittel umfasst, um auf Grundlage des Lernsignals (SA) eine Beziehung zwischen dem eine Bewegung des Schiffs anzeigenden Signal (SM) und dem entsprechenden Steuerungskorrektursignal (SC) zu bestimmen.

4. System nach Anspruch 3, bei welchem wenigstens ein Parameter von einer Amplitude, einer Dauer und einer Verzögerung des Steuerungskorrektursignals (SC) ausgehend von einem Mittelwert eines Parameters des Lernsignals (SA) bestimmt wird.

5. System nach Anspruch 3 oder 4, bei welchem die Beziehung zwischen dem eine Bewegung des Schiffs anzeigenden Signal (SM) und dem entsprechenden Steuerungskorrektursignal (SC) wenigstens teilweise mittels eines Systemidentifizierungsalgorithmus bestimmt wird.

6. System nach einem der vorhergehenden Ansprüche, bei welchem das Modul (MC) zur Erzeugung von Steuerungskorrektursignalen außerdem einen Eingang (EAM) für ein Signal zur manuellen Anpassung (SAM) des Steuerungskorrektursignals (SC) umfasst.

7. System nach einem der vorhergehenden Ansprüche, bei welchem die Vorrichtung (DM) zur Erfassung einer Bewegung des Schiffs wenigstens einen Beschleunigungsmesser zum Bestimmen einer Beschleunigung eines Teils des Schiffs umfasst.

8. System nach einem der vorhergehenden Ansprüche, bei welchem die Vorrichtung (DM) zur Erfassung einer Bewegung des Schiffs wenigstens eine Vorrichtung zur satellitenbasierten Positionsbestimmung umfasst, um eine momentane Position eines Teils des Schiffs zu bestimmen.
